# EUROPÄISCHE PATENTSCHRIFT

(11) **EP 0 547 538 B1**
(45) Veröffentlichungstag und Bekanntmachung des Hinweises auf die Patenterteilung: **06.03.1996**
(21) Anmeldenummer: 92121231.2
(22) Anmeldetag: 14.12.1992
(51) Int. Cl.: H01H 35/18, B29C 67/00

(54) **Elektrischer Schwimmschalter mit elektrischem Anschlusskabel**
Float switch with connecting cable
Interrupteur à flotteur avec câble de raccordement

(30) Priorität: 16.12.1991 US 807268
(43) Veröffentlichungstag der Anmeldung: 23.06.1993
(73) Patentinhaber: Reichensperger, Günter, D-33607 Bielefeld (DE)
(72) Erfinder: Reichensperger, Günter, D-33607 Bielefeld (DE)
(74) Vertreter: Hoefer, Theodor, Dipl.-Ing.

(56) Entgegenhaltungen:
- EP-A- 0 231 782
- DE-U- 7 021 515
- DE-U- 9 005 667
- FR-A- 2 555 498

## Beschreibung

Die Erfindung bezieht sich auf einen elektrischen Schwimmschalter mit elektrischem Anschlußkabel, dessen Mantel gegeneinander isolierte stromführende elektrische Leiter umgibt und das mit dem Gehäuse des Schaltgerätes (Schwimmschalter) dichtend verbunden ist.

Da bisher üblicherweise der Mantel eines elektrischen Kabels und das Gehäuse eines elektrischen Schwimmschalters aus unterschiedlichen Werkstoffen bestehen, sind bisher einwandfrei flüssigkeitsdichtende Verbindungen nur mit erheblichem Aufwand an technischen Einreichtungen zu erreichen. Dabei besteht aber die Gefahr, daß nach einer gewissen Benutzungsdauer sich Undichtigkeiten gegenüber der umgehenden Flüssigkeit einstellen und die Abreißfestigkeit der zunächst miteinander verbundenen Teile Mängel zeigt.

Soweit es bereits druckschriftlich vorbekannt ist, ein elektrisches Kabel mit einem Mantel aus Polyurethan mit einem elektrischen Steckerkörper ebenfalls aus Polyurethan durch Schweißen zu verbinden, so sind derartige Schweißverbindungen gegenüber aggressiven Flüssigkeiten auf Dauer nicht flüssigkeitsdicht zu halten und daher für Schwimmschalter ungeeignet, abgesehen davon, daß diese Veröffentlichung keine speziellen Angaben über das verwendete Polyurethan gibt, das in einer großen Anzahl von Typen auf dem Markt ist.

Aufgabe der Erfindung ist es, einen elektrischen Schwimmschalter mit Kabelanschluß aus wenigen Einzelteilen zu schaffen, bei dem der Kabelmantel mit dem Werkstoff des damit verbundenen Gehäuses des Schalters unter Herstellung eines in einer Spritzmaschine verbundenen Bauteiles eine flüssigkeitsdichte und zerreißfeste Verbindung eingeht. Dabei soll die Verbindung des vorgefertigten Kabels (Kabelmantel) und das damit zu verbindende Gehäuse des Schwimmschalters in einem Arbeitsgang bei gewissem Druck und Temperatur durch Spritzen in einfacher Weise herstellbar sein.

Diese Aufgabe wird bei einem elektrischen Schwimmschalter mit Kabelanschluß der vorgenannten Gattung dadurch gelöst, daß der Mantel des vorgefertigten Kabels aus einem weich eingestellten, aus einer unvernetzten thermoplastischen Polypropylen-Granulatmischung hergestellten Polypropylen besteht und mit dem Gehäuse aus hart eingestelltem Polypropylen des vorgefertigten Schwimmschalters in einem Arbeitsgang in einer Spritzgußmaschine unter Bildung eines verbindenden Bauteiles aus hart eingestelltem Polypropylengranulat verbunden ist.

Durch aufwendige Versuche hat sich überraschenderweise der thermoplastische Kunststoff Polypropylen (als TPE) besonders geeignet gezeigt, da er in seiner Bauteilverbindung dem Angriff oder Eindringen von Flüssigkeiten widersteht und eine hohe Schlagfestigkeit aufweist.

Bei einer bevorzugten Ausführungsform eines elektrischen Kabels mit einem daran flüssigkeitsdicht befestigten Gehäuse eines Schwimmschalters kann der Mantel des Kabels aus dem vorgenannten weichen PTE mit eingemischtem Gummigranulat bestehen, während das Gehäuse aus einem Polypropylengranulat als hartem Thermoplast gebildet ist. Dabei wird das mit einem Mantel versehene vorgefertigte Kabel endseitig in ein Werkzeug (Form) einer Spritzmaschine eingesetzt und aus dem eingegebenen Polypropylengranulat (mit harter Einstellung) bei gewissem Druck und gewisser Temperatur mit dem Gehäuse des vorgefertigten Schwimmschalters unter Bildung eines Verbindungsbauteiles zusammengespritzt. Dabei geht der weiche Mantel des flexiblen elektrischen Kabels mit dem Verbindungsbauteil bzw. mit dem Werkstoff des härteren Gehäuses des Schwimmschalters eine bei auftretenden Zugkräften unzerreißbare Verbindung ein, die flüssigkeitsdichtist und bleibt.

Es entsteht damit im Verbindungsbereich zwischen dem Mantel des vorgefertigten Kabels und dem vorgespritzten Gehäuse des Schwimmschalters ein einziges Verbindungsbauteil, das den gestellten Anforderungen, wie wirtschaftliche Fertigung, geringeres Bauteilgewicht, Korrosionsunempfindlichkeit und Flüssigkeitsdichte entspricht. Die Herstellung erfolgt somit im 3-Stufen-Verfahren, bei dem um den bereits erstellten Kabelmantel (Stufe 1) und das Gehäuse (Stufe 2) des Schwimmschalters das Verbindungsbauteil um den Eingangsteil des Gehäuses mit angesetztem Kabel in einem Arbeitsgang herumgespritzt wird (Stufe 3).

Das Gehäuse des Schwimmschalters besteht aus zwei harten Schalen aus Polypropylen, die in bekannter Weise mittels einer umfassenden Dichtungsleiste randseitig überfaßt und abgedichtet sind, die ebenfalls mit dem harten Werkstoff Polypropylen des Verbindungsbauteils gebildet ist.

Die ein Bauteil bildende Verbindung des Mantels des Kabels mit dem Gehäuse genügt allen auftretenden Beanspruchungen in trockenen, feuchten und nassen Räumen, besonders bei ständiger Wasserlagerung: bei Schwimmschaltern sowohl im Brauchwasser als auch im aggressiven Schmutzwasser. Die Zugfestigkeit bleibt auch nach Alterung über 100° C bestehen.

Durch die Verwendung von weichem Polypropylen für den Mantel des Kabels und von hartem Polypropylen für das umspritzte Gehäuse findet beim Spritzgießen im Werkzeug überraschenderweise eine chemische Verbindung der Moleküle der Randschichten aller drei Teile statt, so daß ein einheitlicher, bisher nicht bekannter Schwimmschalter mit Kabelanschluß sich bildet, der zusammen die hervorragenden neuen Eigenschaften zeigt. Die Flüssigkeits-(Wasser-)aufnahme des Kabelmantels ist wesentlich geringer als bei einem Gummimantel bekannter Art.

Dieses elektrische Kabel mit eingangsseitig umspritztem Gehäuse des Schwimmschalters kann überall dort Verwendung finden - wie z.B. bei Tauchpumpen -, wo ständig Wasser eingesetzt wird.

Weitere Merkmale der Erfindung ergeben sich aus den Unteransprüchen.

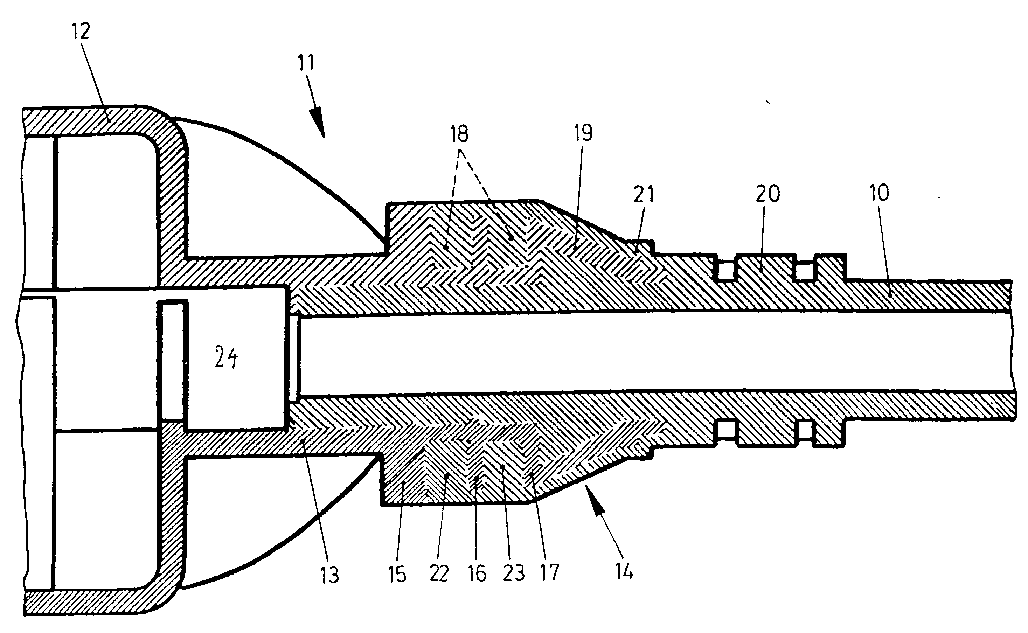

Auf der Zeichnung ist ein Ausführungsbeispiel der Erfindung dargestellt. Dieses zeigt einen Querschnitt durch einen Mantel (10) eines elektrischen Kabels, der mit einem Kabeleingangsteil (11) eines Gehäuses (12) eines Schwimmschalters zugfest und flüssigkeitsdicht in einer Spritzgießmaschine unter Bildung eines einzigen Gesamtbauteils verbunden ist.

Der Werkstoff des Gehäuses (12) des Schwimmschalters besteht aus hart eingestelltem Polypropylen und ist mit nach rechts geneigter Strichlung zu erkennen. Der Werkstoff des Mantels (10) des elektrischen Kabels ist Polypropylen in weicher Einstellung, wobei das Ausgangsgranulat vorzugsweise eine Beimischung von Gummigranulat mit Weicheinstellung enthält. Dabei kann das beigemischte Gummigranulat synthetisches Kautschuk enthalten.

Das Gehäuse (12) verengt sich endseitig zu einem Mundstück (13), in welches das Ende des Mantels (10) teilweise eingesteckt ist.

Das Mundstück (13) steht aus dem Gehäuse (12) vor und bildet einen Flanschteil (14) mit mehreren nach außen im bestand voneinander vorstehenden Ringen (15, 16, 17), die einen nach außen offenen Ringraum (18) bilden.

Von dem äußeren rippenförmigen Ring (17) steht ein konischer Klemmring (19) vor, der kurz vor einer Knickschutzhülle (20) endet, die den Übergang zum freien Mantel (10) des Kabels bildet. Von dieser Knickschutzhülle (20) steht in Richtung auf das Gehäuse (12) ein Überwurfring (21) vor, der zunächst den konischen Klemmring (19) umfaßt und dann mit Halteflanschen (22, 23) in dem Ringraum (18) vorsteht, der damit ausgefüllt ist.

Der Endbereich des Mantels (10), die überbrückende Knickschutzhülle (20) und der vorstehende Überwurfring(21), der die Außenwandung des Verbindungsteils zwischen Mantel (10) und Gehäuse (12) bildet, sind nach links gestrichelt dargestellt und bilden ein einheitliches Bauteil aus Polypropylen, dessen innere Grenzflächen des Flanschteiles (14) unter gewisser Wärme und gewissem hohen Druck in einer Spritzgießmaschine chemisch sich ineinander derart verzahnen (molekular), daß sie einerseits die auftretenden Zugkräfte zwischen elektrischem Kabel und Gehäuse des Schwimmschalters ohne Rißbildung aufnehmen und andererseits auch gegen aggressive Flüssigkeit dicht sind.

Zwischen dem starren (schlagfesten) Gehäuse (12) des Schwimmschalters aus Hart-Polypropylen und dem nach außen ablaufenden flexiblen elektrischen Kabel (in weicher Einstellung des Mantels) ist damit eine bisher noch nicht erreichbare Überbrückung geschaffen, die allen gestellten mechanischen und chemischen Anforderungen genügt und eine lange Lebensdauer bringt, dainsbesondere bei ständiger Lagerung in einer Flüssigkeit-die Wasseraufnahme sehr gering ist.

Die das Gehäuse (12) umfassende Dichtungsleiste (nicht dargestellt) als Teil der Baueinheit (Knickschutztülle (20), Überwurfring (21), Halteflanschen (22,23)) ist auch ebenso wie diese und das Gehäuse (12) aus hartem Polypropylen gebildet.

Bei hohem Druck in der Spritzmschine kann das zunächst sich verflüssigende Polypropylengranulat auch in den mit (24) bezeichneten Raum des Gehäuses (12) am Ende des Kabelmantels (10) einfließen und - diesen ganz oder teilweise ausfüllend - darin thermoplastisch erhärten.

## Patentansprüche

1. Elektrischer Schwimmschalter mit einem elektrischen Anschlußkabel, dessen Mantel gegeneinander isolierte stromführende elektrische Leiter umgibt und das mit dem Gehäuse des Schwimmschalters dichtend verbunden ist, dergestalt, daß
a) der Mantel des vorgefertigten Kabels aus einem weich eingestellten, aus einer unvernetzten thermoplastischen Polypropylen-Granulatmischung hergestellten Polypropylen gebildet ist;
b) und daß der Mantel mit dem Gehäuse aus hart eingestelltem Polypropylen des vorgefertigten Schwimmschalters in einem Arbeitsgang in einer Spritzgußmaschine unter Bildung eines verbindenden Bauteiles aus hart eingestelltem Polypropylengranulat verbunden ist.

2. Schwimmschalter nach Anspruch 1, d.g., daß der Mantel aus einem Polypropylengranulat mit einem eingemischten weichen synthetischen Kautschukgranulat gebildet ist.

3. Schwimmschalter nach Anspruch 1 oder 2, d.g., daß die Granulatmischung für den Mantel feinkörnig ausgebildet ist.

4. Schwimmschalter nach einem der Ansprüche 1 bis 3, d.g., daß der Granulatmischung ein geringer Anteil von vernetztem EPM (Ethylen-Polypropylen-Diethylen)-Granulat beigesetzt ist.

5. Schwimmschalter nach einem der Ansprüche 1 bis 4, d.g., daß der Anteil der vorvernetzten EPM 3 bis 6% beträgt.

6. Schwimmschalter nach einem der Ansprüche 1 bis 5, d.g., daß mit dem verbindenden Bauteil gleichzeitig eine die beiden Schalen des Schwimmschalters abdichtende Umfangsleiste gespritzt ist.

## Claims

1. An electric float switch with an electric connecting cable, the sheath of which surrounds current-carrying electric conductors insulated with respect to one another and which is tightly connected with the housing of the float switch in such a manner that
a) the sheath of the fabricated cable is formed from a plasticised polypropylene manufactured from a non-interlaced thermoplastic polypropylene-granulate mixture;
b) and in such a manner that the sheath is connected to the housing of rigid polypropylene of the fabricated float switch in an operation in an injection moulding machine with the formation of a connecting component of rigid polypropylene granulate.

2. A float switch according to Claim 1,
**characterised in that** the sheath is formed of a polypropylene granulate having an incorporated soft synthetic rubber granulate.

3. A float switch according to Claim 1 or 2,
**characterised in that** the granulate mixture for the sheath has a fine-grained structure.

4. A float switch according to one of Claims 1 to 3,
**characterised in that** a small percentage of interlaced EPM (ethylene-polypropylene-diethylene) is added to the granulate mixture.

5. A float switch according to one of Claims 1 to 4,
**characterised in that** the percentage of the previously interlaced EPM is 3 to 6 %.

6. A float switch according to one of Claims 1 to 5,
**characterised in that** a circumferential strip sealing the two shells of the float switch is simultaneously injected with the connecting component.

## Revendications

1. Interrupteur électrique à flotteur, avec un câble de raccordement électrique dont la gaine entoure des conducteurs électriques conducteurs de courant en les isolant l'un de l'autre et qui est assemblé de manière étanche avec le boîtier de l'interrupteur à flotteur, caractérisé par le fait que
a) la gaine du câble préfabriqué est réalisée en un polypropylène souple fabriqué à partir d'un mélange de granulés de polypropylène thermoplastique non-réticulé,
b) et que la gaine est assemblée avec le boîtier en polypropylène dur de l'interrupteur à flotteur préfabriqué au cours d'une seule opération dans une machine à mouler par injection, en formant un élément d'assemblage en granulés de polypropylène dur.

2. Interrupteur à flotteur selon la revendication 1, caractérisé par le fait que la gaine est réalisée à partir de granulés de polypropylène mélangés avec des granulés de caoutchouc synthétique souple.

3. Interrupteur à flotteur selon la revendication 1 ou 2, caractérisé par le fait que le mélange de granulés pour la gaine se présente sous forme de granulés fins.

4. Interrupteur à flotteur selon l'une des revendications 1 à 3, caractérisé par le fait qu'au mélange de granulés est ajouté un faible pourcentage de granulés d'EPM (éthylène-polypropylène-diéthylène) réticulés.

5. Interrupteur à flotteur selon l'une des revendications 1 à 4, caractérisé par le fait que la proportion de l'EPM préréticulé est de 3 à 6%.

6. Interrupteur à flotteur selon l'une des revendications 1 à 5, caractérisé par le fait que l'on injecte en même temps que l'élément d'assemblage, une bande périphérique obturant de manière étanche les deux coquilles de l'interrupteur à flotteur.
